# EUROPEAN PATENT APPLICATION

(11) **EP 4 660 856 A2**
(43) Date of publication of application: **10.12.2025**
(21) Application number: 25211375.8
(22) Date of filing: 15.12.2023
(51) Int. Cl.: G06F 21/54

(54) **SYSTEMS AND METHODS FOR MANAGING SOFTWARE SECURITY**

(30) Priority: 23.12.2022 US 202263434976 P
(62) Divisional of application: 23217028.2
(71) Applicant: Palantir Technologies Inc., Denver, CO 80202 (US)
(72) Inventor: ROGERS, Callum, Denver, 80202 (US); FOX, Daniel, Denver, 80202 (US); WINDHEUSER, Fabian, Denver, 80202 (US); DEARMENT, Gregory, Denver, 80202 (US)
(74) Representative: Sayer, Robert David

(57) **Abstract**

According to some embodiments, systems and methods for the present disclosure are directed to managing software security including, for example, controlling software deployment via continuous vulnerability scanning. In certain embodiments, a method for managing software security includes the steps of: initiating a vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; determining one or more actions corresponding to the one or more identified security vulnerabilities.

## Description

### CROSS REFERENCE TO RELATED APPLICATIONS

This application claims priority to U.S. Provisional Application No. 63/434,976 and entitled "SYSTEMS AND METHODS FOR MANAGING SOFTWARE SECURITY," filed on December 23, 2022, which is incorporated by reference herein for all purposes in its entirety.

### TECHNICAL FIELD

Certain embodiments of the present disclosure relate to security and vulnerability analysis of software. More particularly, some embodiments of the present disclosure relate to security and vulnerability analysis of software containers.

### BACKGROUND

Effective software security management is an important consideration for modern organizations. However, in some examples, it is difficult to maintain effective security practices such as during the day-to-day production schedule or during software deployment. In certain examples, the challenge organizations face is detecting and mitigating security vulnerabilities in software features such as container images and dependencies due to ineffective security measures. If unchecked, these vulnerabilities expose the organization to unwanted risk and potential liability.

Hence, it is desirable to improve techniques for performing software vulnerability analysis and managing software security.

### SUMMARY

The scope of protection sought for various embodiments of the invention is set out by the independent claims. Certain embodiments of the present disclosure relate to security and vulnerability analysis of software. More particularly, some embodiments of the present disclosure relate to security and vulnerability analysis of software containers.

According to some embodiments, a method for managing software security, the method includes the steps of: initiating a vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; determining one or more actions corresponding to the one or more identified security vulnerabilities. In certain embodiments, the method is performed using one or more processors.

According to certain embodiments, a system for managing software security, the system includes: one or more processors; and one or more memories storing instructions that, when executed by the one or more processors, cause the system to perform a set of operations, the set of operations comprising: initiating a vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; and determining one or more actions corresponding to the one or more identified security vulnerabilities.

According to some embodiments, a method for managing software security, the method includes the steps of: receiving a trigger to initiate a vulnerability scan; initiating the vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; determining one or more actions corresponding to the one or more identified security vulnerabilities; wherein the method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is a simplified diagram showing a method for managing software security according to certain embodiments of the present disclosure.
Figure 2 is a simplified diagram showing a method for managing software security according to certain embodiments of the present disclosure.
Figure 3 is an illustrative example of a software architecture integrating software security management and software supply chain management according to certain embodiments of the present disclosure.
Figure 4 is an illustrative example of a security management environment, according to certain embodiments of the present disclosure.
Figure 5 is a simplified diagram showing a computing system for implementing a system for managing software security and software supply chain in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

According to certain examples, software security management is an important part of managing a modern organization. In some examples, software security management is a challenging task where the demands of implementing effective security practices are balanced against maintaining a daily production schedule and the diverse requirements of a distributed network. In some embodiments, organizations with ineffective security practices risk discovering undetected vulnerabilities in their network systems after the fact when information and/or system access has already been compromised. In some examples, organizations attempt to address these issues with a variety of security measures such as periodic reviews, local virus scanning, etc. However, in certain embodiments, the results of these practices are mixed and/or ineffective when the scale of the practice is expanded to include a larger portion of the network. In some examples, such as during software deployment or full network monitoring scenarios, local security practices do not efficiently or reliably provide network security while maintaining a daily production schedule.

According to some embodiments, systems and methods for the present disclosure are directed to managing software security including, for example, controlling software deployment via continuous vulnerability scanning. In certain embodiments, software security vulnerabilities become increasingly prominent within the software supply chain, so it is important (e.g., crucial) that organizations leverage automated mechanisms to action these vulnerabilities once discovered. In some embodiments, at least some embodiments of the present disclosure describe how generalized software vulnerability data, including data from virus scanners, vulnerability scanners, etc. can be leveraged within an operations system to control software deployment at scale. In certain embodiments, the software supply chain management system provides an operation platform, focused on enabling the efficient and centralized operations of software systems throughout the day-to-day operations and maintenance of the software.

According to certain embodiments, within highly regulated environments such as mission-critical and/or regulated environments, it is typical for the environment owner or regulator to require specific service level agreements (SLAs) on vulnerabilities to be remediated. In some embodiments, these SLAs play a role (e.g., a crucial role) in maintaining the various accreditations for software within the government and commercial spaces. In certain embodiments, automated alerting (e.g., using automated means of alerting) on and actioning vulnerabilities at scale is a key component of the ability to maintain these accreditations.

According to some embodiments, dealing with software vulnerabilities is not a new problem for software vendors, but managing that risk in production environments poses a number of challenges. In some embodiments, by implementing the software security system (e.g., the software security solution) within a software platform (e.g., integrated with a software supply chain system), the system is able to not only understand what software may be vulnerable, but also know exactly where that software is deployed, allowing us to take immediate action to mitigate risk. Furthermore, in certain embodiments, because the system knows what versions of software are deployed within those environments, the system can orchestrate additional vulnerability scans as time goes on, ensuring that the system catches any new vulnerabilities that may have popped up in the time since the deployment of the software.

According to certain embodiments, when these security vulnerabilities are discovered, the system can provide notifications, such as notifications to the teams responsible for the software itself and relevant security teams and/or notifications to the owners for the environment that the software is deployed into. In some embodiments, this provides all teams within the development, security, and/or operation (DevSecOps) ecosystem a view into current risk posture and allows the system and/or the users to take immediate action based on this enhanced visibility.

According to some embodiments, the system uses catalog and manages vulnerabilities across software deployed via runtime environment instance. In certain embodiments, the software security can be a modular component for a software deployment and management system, for example, enabling users (e.g., customers) to select subscriptions (e.g., purchase capability) to integrate with their vulnerability scan data. In some embodiments, the system can also scan container images as a part of the security check. In certain embodiments, a container is a unit of software application that packages software code and the application's dependencies (e.g., software libraries) and/or software services to run the application. In some embodiments, a container image is a standalone, executable package of software that can run a software application, for example, including system libraries, system settings, and/or the like. In certain embodiments, a container image becomes a container (e.g., a containerized application) at runtime.

According to certain embodiments, the system can support additional scanners for vulnerabilities, metadata types, etc. to obtain additional types of vulnerabilities that can be detected. Additionally, in some embodiments, the system can improve integration with various developers and build infrastructure platforms to automate the remediation of specific types of vulnerabilities.

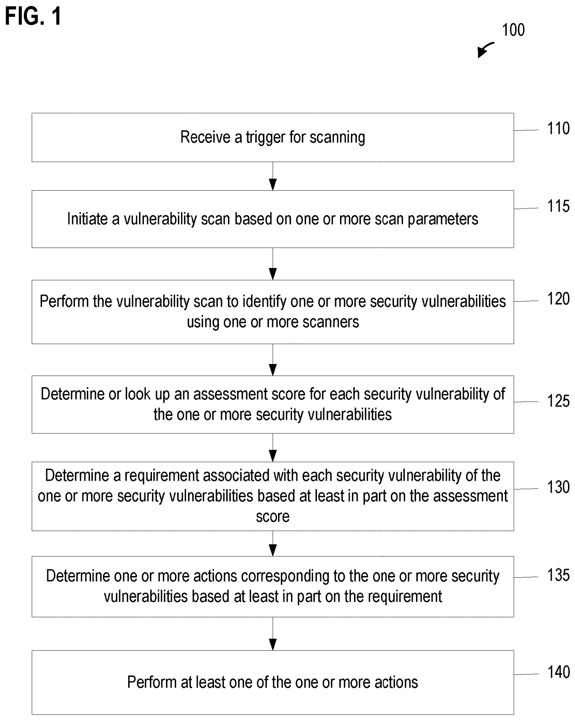

Figure 1 is a simplified diagram showing a method 100 for managing software security according to certain embodiments of the present disclosure. This diagram is merely an example. One of ordinary skill in the art would recognize many variations, alternatives, and modifications. The method 100 for managing software security includes processes 110, 115, 120, 125, 130, 135, and 140. Although the above has been shown using a selected group of processes for the method 100 for managing software security, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 100 are performed by a system (e.g., the computing system 500). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 110, the system receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, software artifacts are software components incorporated into a software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, at process 115, the system initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to some embodiments, at process 120, the system performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment.

According to certain embodiments, at process 125, the system determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range include a low score representing least critical vulnerability and a high score representing most critical vulnerability.

According to some embodiments, at process 130, the system determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the system determines a requirement based in part on an assessment score associated with an identified security vulnerability. In some embodiments, the system determines a first requirement associated with a first identified security vulnerability and a second requirement associated with a second identified security vulnerability, where the second requirement is different from the first requirement. In certain embodiments, the system determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, at process 135, the system determines one or more actions (e.g., remedial actions) corresponding to the one or more identified security vulnerabilities based at least in part on the requirements. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, at process 140, the system performs at least one of one or more actions corresponding to the one or more identified security vulnerabilities. In some embodiments, the system performs one or more actions at one or more runtime instances of the software product. In certain embodiments, the system performs a first action to a first runtime instance of the software product and a second action to a second runtime instance of the software product, where the first action is different from the second action.

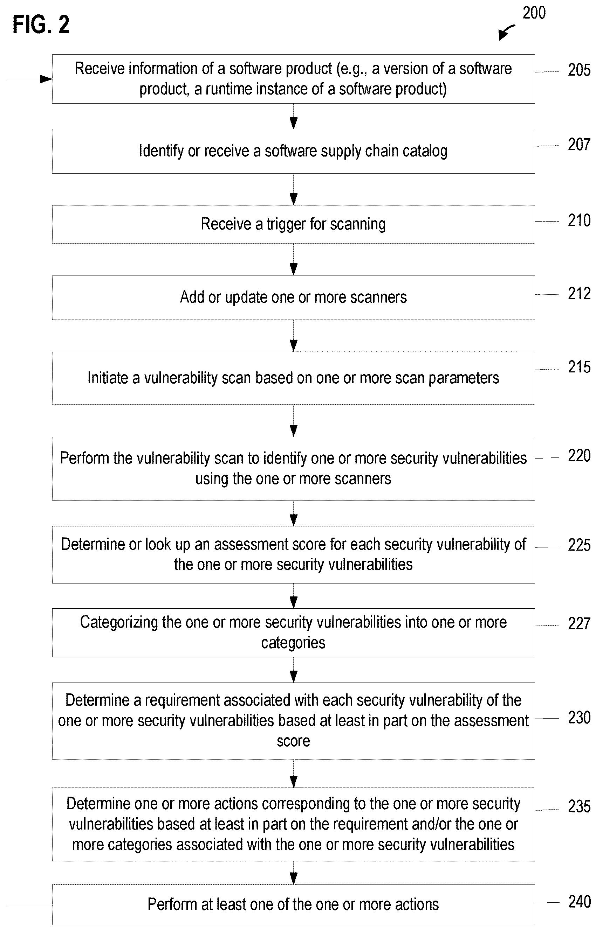

Figure 2 is a simplified diagram showing a method 200 for managing software security according to certain embodiments of the present disclosure. This diagram is merely an example. One of ordinary skill in the art would recognize many variations, alternatives, and modifications. The method 200 for managing software security includes processes 205, 207, 210, 212, 215, 220, 225, 227, 230, 235, and 240. Although the above has been shown using a selected group of processes for the method 200 for managing software security, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 500). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 205, the system receives information of a software product (e.g., a version of a software product, a runtime instance of a software product). In certain embodiments, the information includes deployment information (e.g., runtime environment) for the software product. In some embodiments, the information includes a version of the software product. In certain embodiments, the information includes subscription information.

According to certain embodiments, at process 207, the system identifies or receives a software supply chain catalog. In some embodiments, the software supply chain catalog includes one or more container images corresponding to the software product. In certain embodiments, the software supply chain catalog includes a list of software artifacts. In some embodiments, the software supply chain catalog includes a list of software artifacts that are registered.

According to some embodiments, at process 210, the system receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, artifacts are software components in the software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, at process 212, the system adds or updates one or more scanners. In some embodiments, a scanner is added to the suite of scanners. In certain embodiments, a scanner is updated. In some embodiments, the one or more scanners are selected based on one or more requirements for the software product.

According to some embodiments, at process 215, the system initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to certain embodiments, at process 220, the system performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment. In some embodiments, the system performs the vulnerability scan using the software supply chain catalog, where at least one of the one or more identified security vulnerabilities is associated with one of the one or more registered software components in the software supply chain catalog.

According to some embodiments, at process 225, the system determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range include a low score representing least critical vulnerability and a high score representing most critical vulnerability.

According to certain embodiments, at process 227, the system categorizes the one or more security vulnerabilities into one or more categories. In some embodiments, the one or more categories include a vendor dependency category, a false positive category, a recasted risk category, an accepted risk category, a base image category, and/or the like. In certain embodiments, a vendor dependency category refers that a fix has not yet been released by the responsible third-party vendor. In some embodiments, a false positive category refers that a vulnerability detection is incorrect. In certain embodiments, a recasted risk category refers that a vulnerability is recast to a different criticality rating, based on available mitigations and other factors. In some embodiments, an accepted risk category refers that a vulnerability is accepted for a period outside of security requirements. In certain embodiments, a base image category refers to a vulnerability in a published container originating from the base image it uses.

According to some embodiments, at process 230, the system determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the system determines a requirement based in part on an assessment score associated with an identified security vulnerability. In some embodiments, the system determines a first requirement associated with a first identified security vulnerability and a second requirement associated with a second identified security vulnerability, where the second requirement is different from the first requirement. In certain embodiments, the system determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, at process 235, the system determines one or more actions (e.g., remedial actions) corresponding to the one or more identified security vulnerabilities based at least in part on the requirements and/or the one or more categories associated with the one or more security vulnerabilities. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, at process 240, the system performs at least one of one or more actions corresponding to the one or more identified security vulnerabilities. In some embodiments, the system performs one or more actions at one or more runtime instances of the software product. In certain embodiments, the system performs a first action to a first runtime instance of the software product and a second action to a second runtime instance of the software product, where the first action is different from the second action. According to some embodiments, the system continuously performs the scanning process, for example, by going back to process 205. In certain embodiments, the system performs a vulnerability scanning process before every software deployment.

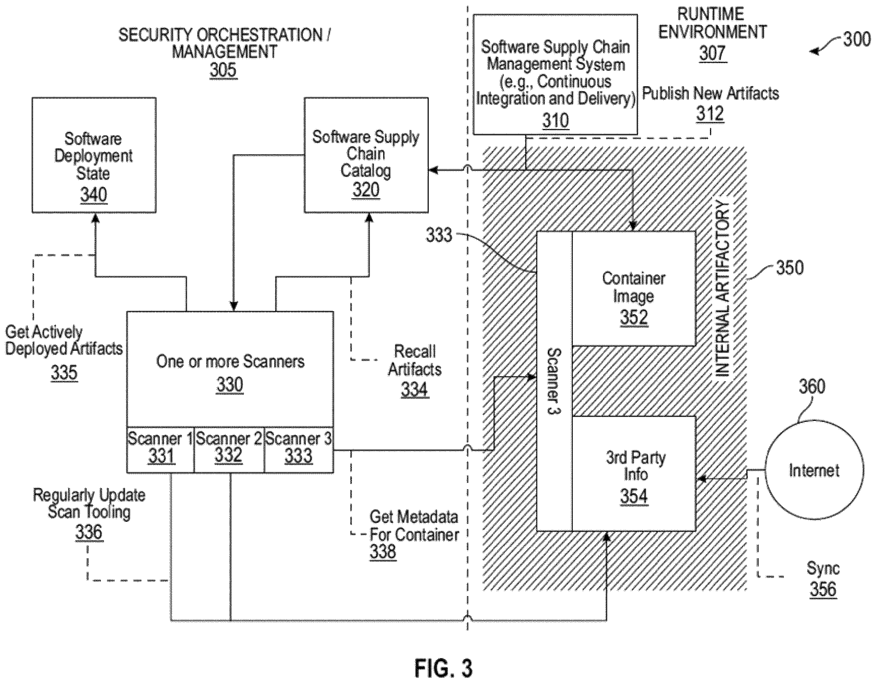

Figure 3 is an illustrative example of a software architecture 300 integrating software security management and software supply chain management according to certain embodiments of the present disclosure. Figure 3 is merely an example. One of the ordinary skilled in the art would recognize many variations, alternatives, and modifications.

According to certain embodiments, effective vulnerability management is a cornerstone of any established security program. In some embodiments, for complex cloud software providers, staying on top of vulnerabilities and quickly remediating them is important (e.g., critical). In certain embodiments, if undetected or unmitigated, vulnerabilities in container images and software dependencies can rapidly become a blind spot that may be exploited. In some embodiments, increasingly complex software and infrastructure rely on ever-growing inventories of third-party libraries, where manually scanning and individually remediating vulnerabilities in dependencies is no longer sufficient. In certain embodiments, enterprises desire to programmatically identify and quantify their exposure to security vulnerabilities, prioritize remediation, and enforce fix timeframes for vulnerabilities.

According to some embodiments, some software systems (e.g., software solutions, software platforms) are used widely (e.g., worldwide) and customers rely on the software systems to safeguard their data against threats. In certain embodiments, the software system includes one or more vulnerability scanners 330 (e.g., continuous vulnerability scanner, container vulnerability scanner or CVS). In some embodiments, the vulnerability scanners 330 include three or more scanners (e.g., scanner 331, scanner 332, scanner 333). In certain examples, the vulnerability scanners 330 are run in a standalone vulnerability scanning service. In some embodiments, the one or more scanners 330 receive metadata for container 338, for example, using the scanner 333.

In certain embodiments, the software supply chain management system 310 can management deployment of a software product in a runtime environment 307. In some embodiments, they system 310 can maintain and/or obtain container images 352 (e.g., container registry, registration of container components, software artifacts). In some embodiments, the system 310 can publish new artifacts 312, for example, for a new version of a software product in a runtime environment 307. In certain embodiments, the one or more vulnerability scanners include a scanner 333 integrated into the software product and runtime environment 307 (e.g., an instance of a software product, an instance of a specific version of a software product), for example, a software deployment solution, a software supply chain management solution, to streamline and even automate vulnerability remediation efforts. In some embodiments, the scanner can receive information on software artifacts used in the software product in the runtime environment 307 via third party information system 354, for example, via internet 360 and/or a synchronization service 356. In certain embodiments, the scanner 333 can scan container images (e.g., container registry) and/or software artifacts to detect vulnerabilities.

According to certain embodiments, the system can surpass security requirements, and/or comply with accredited security frameworks in the field. For example, the runtime environment 307 is certified for a certain impact level (e.g., FedRAMP Moderate/DoD Impact Level 5 (IL5)); by extension, a security orchestration/management engine 305 (e.g., a software service), for example, including the one or more scanners 330 (e.g., CVS), is designed to meet or exceed the certain impact level vulnerability management requirements across various runtime environments (e.g., production environments). In some embodiments, these requirements (e.g., security requirements, requirements in service level agreements (SLAs)) dictate considerations such as authenticated scanning, CVE numbering and CVSS (common vulnerability scoring system) risk scoring, signature updates, and asset identification.

According to some embodiments, at a high level, the security orchestration and/or management system (e.g., security orchestration and/or management engine) 305 ensures that software components and products meet security requirements by one or more of:
- Collecting and managing (e.g., centrally) software and vulnerabilities to simplify tracking and remediation efforts;
- Scanning containers to detect vulnerabilities in container layers and malicious software;
- Scanning product artifacts for known dependency vulnerabilities;
- Fixing all identified issues within service-level agreements (SLAs), with any breach of resolution timeline automatically preventing impacted assets from being deployed; and
- Requiring a review process (e.g., stringent review process) for all exceptions and accepted risks. In some embodiments, any findings that have been suppressed must also define an expiration date for the suppression, which mandates periodic re-review and re-acceptance.

According to certain embodiments, the security orchestration and/or management system (e.g., security orchestration and/or management engine) 305 can enforce security requirements (e.g., requirements in SLAs) for vulnerability remediation. In certain embodiments, while these SLAs include a time (e.g., a maximum time) permitted to address a vulnerability, the engine can fix them within the permitted time. In some embodiments, the system can prioritize detected security vulnerabilities, for example, prioritize critical and high vulnerabilities for expedient mitigation and remediation when they are detected.

As an example, for security vulnerabilities on underlying infrastructure, containers, or hosts, the system can use the following SLAs and corresponding time periods: critical: 72 hours; high: 30 days; medium: 90 days; and low: 120 days.

For example, for security vulnerabilities in software products that may be significantly more complicated to remediate, the system can use the following SLAs and corresponding time periods: critical: 30 days; high: 30 days; medium: 90 days; and low: 120 days.

According to some embodiments, the security orchestration and/or management system 305 (e.g., the engine) can manage and integrate multiple vulnerability scanners 330 (e.g., in CVS). In certain embodiments, the security orchestration and management system 305 is a framework that allows for implementation of multiple scanners. In some embodiments, the system 305 can regularly update scan tooling 336. In certain embodiments, when the security requirements shift over time, the system 305 can add a new scanner to perform a discrete function, and then use the output of that scanner as part of conditional logic downstream. In some embodiments, the system 305 can recall artifacts 334 and also provide actively deployed artifacts 335 to the software deployment state 340.

According to certain embodiments, the system uses three or more scanners. For example, the scanners include a scanner to scan container image to detect known CVEs (common vulnerability exposure) in underlying layers and components included within the container. As an example, the scanners include a scanner to scan a container image to detect known malware and other threats. In some examples, a scanner can be used with an open-source rules engine, commercial rules, and/or custom rules authored by a security team. In certain embodiments, one or more scanners provide a first pass at using signatures to detect anomalous or malicious files present in shipped containers. In some embodiments, the one or more scanners 330 include a software composition analysis tool 333 (e.g., scanner, Xray). In certain embodiments, the scanner can scan different types of artifacts to detect known vulnerabilities in the artifact's dependencies. In some embodiments, artifacts are software components in the software products. In certain embodiments, the scanner can offer a comprehensive dependency scan coverage of all applications deployed, agnostic of the source code language (e.g., Java, JavaScript, Go, and Rust).

According to some embodiments, the software supply chain management system 310 can provide continuous integration and/or delivery. In certain embodiments, in a container-based cloud deployment architecture, the system can use container images 352, such as minimized container images, based at least in part on underlying infrastructure and hosts. In some embodiments, all hosts within a container-based environment are ephemeral, such that they are built, destroyed, and rebuilt at regular intervals. In certain embodiments, an up-to-date container image 352 is maintained with the latest version of the software product (e.g., latest patches), for example, to guarantee that hosts will be patched at least every time they are rebuilt. In some embodiments, this method of container image management allows the system to ensure that every host is appropriately updated and scanned by the one or more scanners 330 prior to deployment.

According to certain embodiments of using application containers, the system 310 can use, manage and/or maintain a container image (e.g., a scratch-based image). In some embodiments, the container has a minimized footprint to reduce the attack surface of packages that are not strictly necessary. For example, a standard container might contain about 90 packages, a minimized container image ships with 6 packages. In some examples, the minimized container image does not include shells, package managers, and/or any other packages.

According to some embodiments, using a minimized container image as the starting point can reduce the application attack surface and eliminate a swath of vulnerabilities. In certain embodiments, this approach ensures the system will focus limited resources and effort on applicable security defects, rather than on remediating ancillary packages or dependency vulnerabilities that have no security impact on the products.

According to certain embodiments, the security orchestration and management system 305 can perform software supply chain catalog scanning. In some embodiments, the software in a runtime environment 307 is managed via the software supply chain management system 310 (e.g., a software deployment system). In certain embodiments, each individual software component (e.g., a software artifact, an artifact) to be deployed in the runtime environment is first registered in the software supply chain catalog. In some embodiments, the components (e.g., artifacts) registered in the software supply chain catalog 320 are received by the one or more enrolled in CVS and are required to meet specific security criteria before it is deployed to any environment.

According to some embodiments, every version of every software component released receives a vulnerability scan when initially added to the software supply chain catalog. In certain embodiments, every version of every software component must continually meet the security requirements (e.g., requirements in SLAs). In some embodiments, the system 305 is scalable (e.g., highly scalable) and automated, such that it can provide guarantees on security baselines across runtime environments 307 (e.g., runtime environments managed by the software supply chain management system).

According to certain embodiments, the system 305 can perform software recalls on one or more detected vulnerabilities. In some embodiments, the system 305 can perform software suppressions on one or more detected vulnerabilities. In certain embodiments, a software recall includes a rollback to a previous version. In some embodiments, the exact behavior is configurable to meet specific needs, but by default, artifacts marked as recalled cannot be deployed, either by an installation or by an upgrade. Instead, in certain embodiments, the artifacts will remain on their existing version until a new, non-recalled version is released. In some embodiments, a recall action includes a pause to software deployment. In some embodiments, a suppression action includes temporarily suppressing the one or more detected vulnerabilities. In certain embodiments, a suppression action includes suppressing the one or more detected vulnerabilities in a predetermined time period.

According to some embodiments, policy-based enforcement of remediation SLAs can be insufficient. In certain embodiments, the conventional system has high uptime requirements, the testing required to safely patch in place, and coordination of maintenance windows makes human intervention impossible to scale. In some embodiments, the security orchestration and management system 305 and the software supply chain management system 310 can work together to automatically take action based upon scan results and logical rules.

According to certain embodiments, if a container or artifact scan fails a vulnerability scan, the respective product is automatically marked as recalled in Apollo. In some embodiments, this checkpoint ensures that if a vulnerability is introduced in a new product version, the software product can avoid being susceptible to vulnerabilities when deployed in various runtime environments (e.g., across the fleet). In certain embodiments, whenever the recalled version is also the latest version in the product catalog, a product support ticket is filed, which is routed immediately to the product owner for the recalled service. In some embodiments, this escalates the issue directly to the team, at an appropriate priority level, to intervene and determine the short-term and/or long-term fixes. In certain embodiments, by placing responsibility for vulnerability management early in the build pipeline, this approach incentivizes that the dependencies are kept up-to-date and provides flexibility for remediation.

According to some embodiments, there are edge cases, such as identified vulnerabilities being false positive, software products and/or artifacts being inappropriately marked as vulnerable, patches for fixing vulnerabilities not existing, and/or the like. In certain embodiments, the security orchestration and management system 305 has a flexible suppression feature set that allows for handling these edge cases in a time-bound and risk-adjusted way.

According to certain embodiments, at least a part or all suppressions of identified vulnerabilities require manual review and approval (e.g., by the security team). In some embodiments, these suppressions are periodically reviewed by the compliance team to ensure the software product meets regulatory and compliance requirements. In certain embodiments, a suppression is specified using a structured format.

An example suppression includes:
CVE-2022-XXXX:
category: VENDOR_DEPENDENCY
rationale: package-name | No stable vendored fix available yet
valid-until: "2022-10-15" # One month from now

In this example, the specific CVE has been requested for a temporary 30-day suppression, as no vendor fix is yet available. After the valid-until date expires, the suppression is automatically removed, and the system can begin its recall process (e.g., with no warning).

According to some embodiments, categories that may be considered for suppression include:
- Vendor Dependency: A fix has not yet been released by the responsible third-party vendor.
- False Positive: A vulnerability detection is demonstrably incorrect.
- Recasted Risk: A vulnerability is recast to a different criticality rating, based on available mitigations and other factors.
- Accepted Risk: A vulnerability may need to be accepted for a period outside of security requirements (e.g., requirements in SLA) due to external factors (e.g., complexity in remediation, infrastructure migration, etc.).
- Base Image: A vulnerability in a published container originates from the base image it uses. Given that there are many downstream containers that use the same base image, a vulnerability that affects one of the base images can in turn be present in many others. This type of suppression is thus used to suppress a vulnerability that does not have a good fix in one of the base images, to prevent product recalling in all the images that use it.

According to certain embodiments, having a robust, auditable, reviewed suppression and recall system allows users to quickly track and fix commonplace patches in the software products, while allowing the security team to focus more deeply on the most critical vulnerabilities impacting the product fleet.

According to some embodiments, the security scanners are instrumental for meeting and/or exceeding the security requirements and expectations in various runtime environments (e.g., cloud environments, software-as-a-service environments, on-premises environments). In certain embodiments, the security orchestration and management system 305 can improve patching velocity, increase confidence that security controls are applied uniformly and effectively, and improved the ability to respond to security defects in products and infrastructure.

According to certain embodiments, the system 305 includes configurable controls and rules logic, and allow multi-party reviews and/or approvals. In some embodiments, the system 305 can use native software bill of material (SBOM) generation and validation. In certain embodiments, to protect the software supply chain, the system can enforce security controls which guarantee provenance and integrity for published software artifacts, to better withstand supply chain attacks that commonly target software companies.

According to some embodiments, the security orchestration and management system 305 can regularly update scan tooling 336 (e.g., add additional scanners). For example, the system can use YARA rules to hunt for malicious and anomalous implants and malware across the product fleet globally. In some examples, the one or more scanners 330 include a native YARA scanner, which can allow network defenders better insight and protection against actors attempting to insert malicious code into containers and software, for instance.

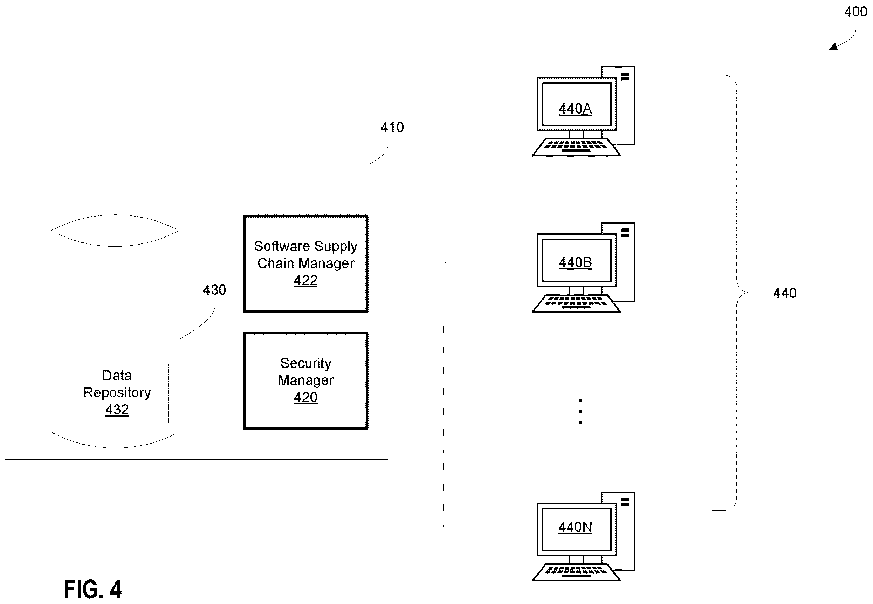

Figure 4 is an illustrative example of security management environment 400, according to certain embodiments of the present disclosure. Figure 4 is merely an example. One of the ordinary skilled in the art would recognize many variations, alternatives, and modifications. According to certain embodiments, security management environment 400 includes a security management system 410 and one or more runtime environments 440 (e.g., runtime environment 440A, runtime environment 440B, . . . , runtime environment 440N). In some embodiments, the security management system 410 includes a security manager 420, a software supply chain manager 422, and a repository 430. In certain embodiments, some components of the security management system 410 are included in one or more runtime environments 440.

Although the above has been shown using a selected group of components in the security management environment 400, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the security management system 410 receives information of a software product (e.g., a version of a software product, a runtime instance of a software product). In certain embodiments, the information includes deployment information (e.g., runtime environment) for the software product. In some embodiments, the information includes a version of the software product. In certain embodiments, the information includes subscription information.

According to certain embodiments, the security management system 410 and/or the software supply chain manager 422 identifies or receives a software supply chain catalog. In some embodiments, the software supply chain catalog includes one or more container images corresponding to the software product. In certain embodiments, the software supply chain catalog includes a list of software artifacts. In some embodiments, the software supply chain catalog includes a list of software artifacts that are registered. In certain embodiments, the software supply chain catalog is stored in the data repository 432.

According to some embodiments, the security management system 410 and/or the security manager 420 receives a trigger for scanning. In certain embodiments, the trigger is a new version of a software product that becomes available. In some embodiments, the trigger is a new deployment of a software product. In certain embodiments, the trigger is a new security vulnerability being discovered, where the new security vulnerability is associated with a software artifact known to be used in a software product. In some embodiments, a software product has a list of software artifacts corresponding to a version and/or a deployment instance. In certain embodiments, artifacts are software components in the software product. In some embodiments, the list of software artifacts is generated based at least in part on a container image. In certain embodiments, the list of software artifacts is generated by software registration. In some embodiments, the trigger is a trigger by a time associated with periodic scanning (e.g., every day, every week).

According to certain embodiments, the security management system 410 and/or the security manager 420 adds or updates one or more scanners. In some embodiments, a scanner is added to the suite of scanners. In certain embodiments, a scanner is updated. In some embodiments, the one or more scanners are selected based on one or more requirements for the software product.

According to some embodiments, the security management system 410 and/or the security manager 420 initiates a vulnerability scan to a software product based on one or more scan parameters. In some embodiments, the vulnerability scan is conducted to a plurality of runtime instances of the software product. In certain embodiments, the one or more scanning parameters include a timing parameter, an environment parameter, a product parameter, and/or the like. In some embodiments, a timing parameter includes, for example, a frequency of scanning, a minimum interval between two adjacent scans, and/or the like. In certain embodiments, the environment parameter includes a parameter associated with a runtime environment (e.g., a testing environment, a production environment, a developer environment, etc.). In some embodiments, the product parameter includes a parameter associated with the software product (e.g., version).

According to certain embodiments, the security management system 410 and/or the security manager 420 performs the vulnerability scan on the software product to identify one or more security vulnerabilities using one or more scanners. In certain embodiments, the one or more scanners include a scanner for container images, a scanner for software dependencies, a scanner for malware, and/or the like. In some embodiments, the one or more scanners include a scanner integrated with an instance of the software product. In certain embodiments, the one or more scanners include a scanner integrated with an instance of the software product in a runtime environment. In some embodiments, the security management system 410 and/or the security manager 420 performs the vulnerability scan using the software supply chain catalog, where at least one of the one or more identified security vulnerabilities is associated with one of the one or more registered software components in the software supply chain catalog.

According to some embodiments, the security management system 410 and/or the security manager 420 determines or looks up an assessment score for each security vulnerability of the one or more security vulnerabilities. In some embodiments, the assessment score is a CVE (Common Vulnerability Exposure) score. In certain embodiments, the assessment score is retrieved from a database (e.g., a database of an organization). For example, the assessment score has a score range include a low score representing least critical vulnerability and a high score representing most critical vulnerability.

According to certain embodiments, the security management system 410 and/or the security manager 420 categorizes the one or more security vulnerabilities into one or more categories. In some embodiments, the one or more categories include a vendor dependency category, a false positive category, a recasted risk category, an accepted risk category, a base image category, and/or the like.

According to some embodiments, the security management system 410 and/or the security manager 420 determines a requirement associated with each security vulnerability of the one or more identified security vulnerabilities based at least in part on the assessment scores. In certain embodiments, the requirement includes a requirement associated with an SLA requirement, for example, a clause in the SLA. In some embodiments, the requirement includes a requirement associated with a runtime environment. In certain embodiments, the requirement includes a contractual requirement. In some embodiments, the requirement includes a regulatory requirement. In certain embodiments, the requirement includes a parameter indicative of a permitted time period to address a vulnerability.

In some embodiments, the requirement includes a parameter indicative of a permitted time period to address a vulnerability for a corresponding assessment score. In certain examples, the requirement includes a first time period for addressing a vulnerability at a first assessment score and a second time period, different from the first time period, for addressing the vulnerability at a second assessment score. In some examples, the first assessment score is indicative of higher criticality for the vulnerability than the second assessment score, and the first time period is shorter than the second time period.

In certain embodiments, the security management system 410 and/or the security manager 420 determines a requirement based in part on an assessment score associated with an identified security vulnerability. In some embodiments, the security management system 410 and/or the security manager 420 determines a first requirement associated with a first identified security vulnerability and a second requirement associated with a second identified security vulnerability, where the second requirement is different from the first requirement. In certain embodiments, the security management system 410 and/or the security manager 420 determines a first requirement associated with a security vulnerability at a first assessment score and a second requirement associated with the security vulnerability at a second assessment score, where the second requirement is different from the first requirement. In some embodiments, the second requirement is different from the first requirement in a required time for an action to be taken.

According to some embodiments, the security management system 410 and/or the security manager 420 determines one or more actions (e.g., remedial actions) corresponding to the one or more identified security vulnerabilities based at least in part on the requirements and/or the one or more categories associated with the one or more security vulnerabilities. In certain embodiments, the one or more actions include a recall action to the software product and/or one or more software artifacts used in the software product. In some embodiments, the one or more actions include a suppression action to the software product and/or one or more software artifacts used in the software product. In certain embodiments, the one or more actions include a patch action to deploy a patch to one or more runtime instances of the software product. In some embodiments, the one or more actions include an upgrade action to deploy an upgrade to one or more runtime instances of the software product. In certain embodiments, the one or more actions include a patch action to deploy a release to one or more runtime instances of the software product.

According to certain embodiments, the security management system 410 and/or the security manager 420 performs at least one of one or more actions corresponding to the one or more identified security vulnerabilities. In some embodiments, the security management system 410 and/or the security manager 420 performs one or more actions at one or more runtime instances of the software product. In certain embodiments, the security management system 410 and/or the security manager 420 performs a first action to a first runtime instance of the software product and a second action to a second runtime instance of the software product, where the first action is different from the second action. According to some embodiments, the security management system 410 and/or the security manager 420 continuously performs the scanning process.

In some embodiments, the repository 430 can include software supply chain catalog, one or more identified vulnerabilities, one or more assessment scores, one or more actions, and/or the like. The repository 430 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the security management environment 400 can execute software or firmware stored in non-transitory computer-readable medium to implement various processing steps. Various components and processors of the security management environment 400 can be implemented by one or more computing devices including, but not limited to, circuits, a computer, a cloud-based processing unit, a processor, a processing unit, a microprocessor, a mobile computing device, and/or a tablet computer. In some cases, various components of the security management environment 400 (e.g., the security management system 410, runtime environment 440, security manager 420, the software supply chain manager 422) can be implemented on a shared computing device. Alternatively, a component of the security management environment 400 can be implemented on multiple computing devices. In some implementations, various modules and components of the security management environment 400 can be implemented as software, hardware, firmware, or a combination thereof. In some cases, various components of the security management environment 400 can be implemented in software or firmware executed by a computing device.

Various components of security management environment 400 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

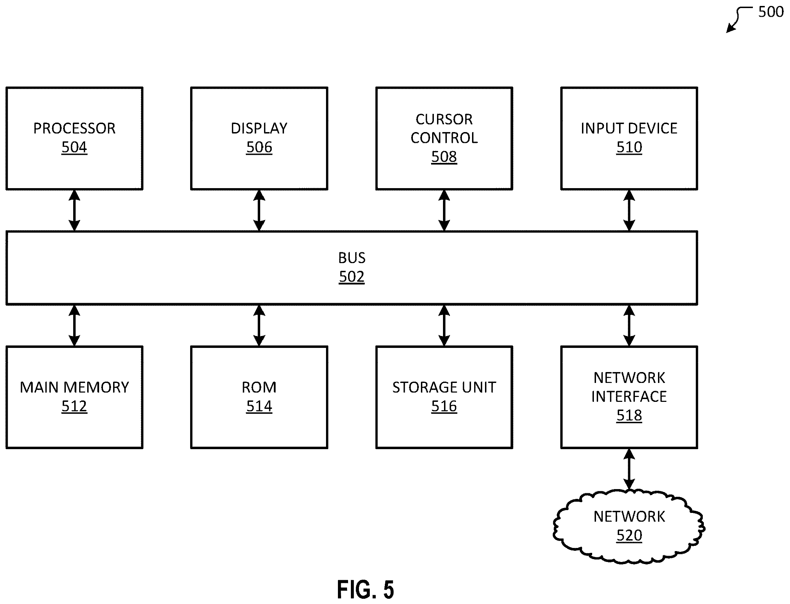

Figure 5 is a simplified diagram showing a computing system for implementing a system 500 for managing software security and software supply chain in accordance with at least one example set forth in the disclosure. This diagram is merely an example, which should not unduly limit the scope of the claims. One of ordinary skill in the art would recognize many variations, alternatives, and modifications.

The computing system 500 includes a bus 502 or other communication mechanism for communicating information, a processor 504, a display 506, a cursor control component 508, an input device 510, a main memory 512, a read only memory (ROM) 514, a storage unit 516, and a network interface 518. In some embodiments, some or all processes (e.g., steps) of the methods 100, and/or 200 are performed by the computing system 500. In some examples, the bus 502 is coupled to the processor 504, the display 506, the cursor control component 508, the input device 510, the main memory 512, the read only memory (ROM) 514, the storage unit 516, and/or the network interface 518. In certain examples, the network interface is coupled to a network 520. For example, the processor 504 includes one or more general purpose microprocessors. In some examples, the main memory 512 (e.g., random access memory (RAM), cache and/or other dynamic storage devices) is configured to store information and instructions to be executed by the processor 504. In certain examples, the main memory 512 is configured to store temporary variables or other intermediate information during execution of instructions to be executed by processor 504. For examples, the instructions, when stored in the storage unit 516 accessible to processor 504, render the computing system 500 into a special-purpose machine that is customized to perform the operations specified in the instructions. In some examples, the ROM 514 is configured to store static information and instructions for the processor 504. In certain examples, the storage unit 516 (e.g., a magnetic disk, optical disk, or flash drive) is configured to store information and instructions.

In some embodiments, the display 506 (e.g., a cathode ray tube (CRT), an LCD display, or a touch screen) is configured to display information to a user of the computing system 500. In some examples, the input device 510 (e.g., alphanumeric and other keys) is configured to communicate information and commands to the processor 504. For example, the cursor control component 508 (e.g., a mouse, a trackball, or cursor direction keys) is configured to communicate additional information and commands (e.g., to control cursor movements on the display 506) to the processor 504.

According to certain embodiments, a method for managing software security, the method comprising: initiating a vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; determining one or more actions corresponding to the one or more identified security vulnerabilities; wherein the method is performed using one or more processors. For example, the method is implemented according to at least Figure 1, Figure 2, Figure 3, and/or Figure 4.

In some embodiments, the method further comprises: receiving a software supply chain catalog associated with the software product including information of one or more registered software components; wherein the performing the vulnerability scan comprises performing the vulnerability scan using the software supply chain catalog; wherein at least one of the one or more identified security vulnerabilities is associated with one of the one or more registered software components. In certain embodiments, the one or more scanners include at least one of a scanner of a container image, a scanner integrated with an instance of the software product, and a scanner of one or more software dependencies. In some embodiments, the method further comprises: looking up an assessment score associated with the first identified security vulnerability of the one or more identified security vulnerabilities; where the determining a requirement associated with at least one security vulnerability of the one or more identified security vulnerabilities comprises determining the requirement based in part on the assessment score associated with the first identified security vulnerability.

In certain embodiments, the method further comprises: determining a second requirement associated with a second identified security vulnerability of the one or more identified security vulnerabilities; wherein the second requirement is different from the first requirement. In some embodiments, the second requirement is different from the first requirement in a required time for an action to be taken. In certain embodiments, the method further comprises: performing at least one of one or more actions corresponding to the one or more identified security vulnerabilities. In some embodiments, the method further comprises: receiving information associated with a second version of the software product; adding a first scanner to the one or more scanners based at least in part on the second version of the software product.

According to certain embodiments, a system for managing software security, the system comprising: one or more processors; and one or more memories storing instructions that, when executed by the one or more processors, cause the system to perform a set of operations, the set of operations comprising: initiating a vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; and determining one or more actions corresponding to the one or more identified security vulnerabilities. For example, the method is implemented according to at least Figure 1, Figure 2, Figure 3, and/or Figure 4.

In some embodiments, the operations further comprise: receiving a software supply chain catalog associated with the software product including information of one or more registered software components; wherein the performing the vulnerability scan comprises performing the vulnerability scan using the software supply chain catalog; wherein at least one of the one or more identified security vulnerabilities is associated with one of the one or more registered software components. In certain embodiments, the one or more scanners include at least one of a scanner of a container image, a scanner integrated with an instance of the software product, and a scanner of one or more software dependencies. In some embodiments, the operations further comprise: looking up an assessment score associated with each security vulnerability of the one or more identified security vulnerabilities; wherein the determining a requirement associated with at least one security vulnerability of the one or more identified security vulnerabilities comprises determining the requirement based in part on an assessment score associated with the first identified security vulnerability.

In certain embodiments, the operations further comprise: determining a second requirement associated with a second identified security vulnerability of the one or more identified security vulnerabilities; wherein the second requirement is different from the first requirement. In some embodiments, the second requirement is different from the first requirement in a required time for an action to be taken. In certain embodiments, the operations further comprise: performing at least one of one or more actions corresponding to the one or more identified security vulnerabilities. In some embodiments, the operations further comprise: receiving information associated with a second version of the software product; adding a first scanner to the one or more scanners based at least in part on the second version of the software product.

According to certain embodiments, a method for managing software security, the method comprising: receiving a trigger to initiate a vulnerability scan; initiating the vulnerability scan to a software product based on one or more scan parameters; performing the vulnerability scan to the software product to identify one or more security vulnerabilities using one or more scanners; determining a requirement associated with a first identified security vulnerability of the one or more identified security vulnerabilities; determining one or more actions corresponding to the one or more identified security vulnerabilities; wherein the method is performed using one or more processors. For example, the method is implemented according to at least Figure 1, Figure 2, Figure 3, and/or Figure 4.

In some embodiments, the method further comprises: receiving a software supply chain catalog associated with the software product including information of one or more registered software components; wherein the performing the vulnerability scan comprises performing the vulnerability scan using the software supply chain catalog; wherein at least one of the one or more identified security vulnerabilities is associated with one of the one or more registered software components. In certain embodiments, the trigger includes one or more of a new version of a software product becoming available, a new deployment of a software product, a new security vulnerability being discovered, or a time associated with periodic scanning. In some embodiments, the method further comprising: looking up an assessment score associated with each security vulnerability of the one or more identified security vulnerabilities; wherein the determining a requirement associated with at least one security vulnerability of the one or more identified security vulnerabilities comprises determining the requirement based in part on an assessment score associated with the first identified security vulnerability.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

The following clauses form part of the disclosure.
1. A method for managing software security, the method comprising:
   initiating a vulnerability scan to a software product based on one or more scan parameters;
   performing the vulnerability scan to the software product to identify one or more security vulnerabilities using one or more scanners;
   determining a requirement associated with a first identified security vulnerability of the one or more identified security vulnerabilities;
   determining one or more actions corresponding to the one or more identified security vulnerabilities;
   wherein the method is performed using one or more processors.
2. The method of clause 1, further comprising:
   receiving a software supply chain catalog associated with the software product including information of one or more registered software components;
   wherein the performing the vulnerability scan comprises performing the vulnerability scan using the software supply chain catalog;
   wherein at least one of the one or more identified security vulnerabilities is associated with one of the one or more registered software components.
3. The method of clause 1 or clause 2, wherein the one or more scanners include at least one selected from a group consisting of a scanner of a container image, a scanner integrated with an instance of the software product, and a scanner of one or more software dependencies.
4. The method of any preceding clause, further comprising:
   looking up an assessment score associated with each security vulnerability of the one or more identified security vulnerabilities;
   wherein the determining a requirement associated with at least one security vulnerability of the one or more identified security vulnerabilities comprises determining the requirement based in part on an assessment score associated with the first identified security vulnerability.
5. The method of any preceding clause wherein the requirement is a first requirement, wherein the method further comprises:
   determining a second requirement associated with a second identified security vulnerability of the one or more identified security vulnerabilities;
   wherein the second requirement is different from the first requirement.
6. The method of clause 5, wherein the second requirement is different from the first requirement in a required time for an action to be taken.
7. The method of any preceding clause, further comprising:
   performing at least one of one or more actions corresponding to the one or more identified security vulnerabilities.
8. The method of any preceding clause, further comprising:
   receiving information associated with a second version of the software product;
   adding a first scanner to the one or more scanners based at least in part on the second version of the software product.
9. A system for managing software security, the system comprising:
   one or more processors; and
   one or more memories storing instructions that, when executed by the one or more processors, cause the system to perform a method of any preceding clause.

## Claims

1. A method for managing software security, the method comprising:
receiving (207) a software supply chain catalog associated with a software product including information of one or more registered software components;
initiating (115, 215) a vulnerability scan to the software product based on one or more scan parameters;
performing (120, 220) the vulnerability scan using the software supply chain catalog to a plurality of runtime instances of the software product to identify one or more security vulnerabilities using one or more scanners, wherein at least one of the one or more security vulnerabilities is associated with one of the one or more registered software components;
determining (135, 235) one or more actions corresponding to the one or more identified security vulnerabilities; and
performing at least one of the one or more actions before deployment of the software product to one or more runtime environments,
wherein the method is performed using one or more processors.

2. The method of claim 1, wherein the one or more scanners include at least one selected from a group consisting of a scanner of a container image, a scanner integrated with an instance of the software product, and a scanner of one or more software dependencies.

3. The method of any preceding claim, further comprising:
looking up an assessment score associated with each security vulnerability of the one or more identified security vulnerabilities;
determining a requirement associated with at least one security vulnerability of the one or more identified security vulnerabilities based in part on an assessment score associated with the first identified security vulnerability.

4. The method of claim 3, wherein the requirement is a first requirement, wherein the method further comprises:
determining a second requirement associated with a second identified security vulnerability of the one or more identified security vulnerabilities;
wherein the second requirement is different from the first requirement.

5. The method of claim 4, wherein the second requirement is different from the first requirement in a required time for an action to be taken.

6. The method of any preceding claim, further comprising:
receiving information associated with a second version of the software product;
adding a first scanner to the one or more scanners based at least in part on the second version of the software product.

7. The method of any preceding claim, further comprising:
receiving a trigger to initiate a vulnerability scan, wherein initiating the vulnerability scan is in response to the received trigger.

8. A system (500) for managing software security, the system comprising:
one or more processors; and
one or more memories storing instructions that, when executed by the one or more processors, cause the system to perform a method of any preceding claim.
